# EUROPEAN PATENT SPECIFICATION

(11) **EP 1 955 528 B1**
(45) Date of publication and mention of the grant of the patent: **19.08.2009**
(21) Application number: 06818451.4
(22) Date of filing: 10.11.2006
(51) Int. Cl.: H04M 1/02

(54) **COVER**
ABDECKUNG
BOITIER

(30) Priority: 15.11.2005 US 274614
(43) Date of publication of application: 13.08.2008
(73) Proprietor: Sony Ericsson Mobile Communications AB, 221 88 Lund (SE)
(72) Inventor: FOXENLAND, Eral, S-217 41 Malmö (SE)
(74) Representative: Andersson, Björn E.
(86) International application number: PCT/EP2006/010774
(87) International publication number: WO 2007/057124

(56) References cited:
- WO-A-98/56221
- WO-A-20/05078402
- GB-A- 2 402 750

## Description

### Technical Field

The present invention relates to the field of covers, comprising at least one containment with a transparent wall and at least one microorganism comprised in said at least one containment; surfaces comprising at least one microorganism, wherein said surface has an appearance provided by said at least one microorganism; and ampoules suitable therefore.

### Background

Covers, such as covers for phones, made of plastics etc., may have almost no limitation in variations regarding appearances. A lot of different looks and expressions may be accomplished, such as colours, surface decorations, designs, etc., which may be static in their appearance. Static, in this context, means that the colour and/or appearance of the phone cover is fixed, which may require that the user has to change the entire phone cover if a change of appearance regarding the phone cover is desired. This may not only be costly, but may also be cumbersome for the user.

WO 2005/078402 discloses an indicator comprising a microorganism, which microorganism provides a time temperature indicator system (TTI) for monitoring a thermally sensitive product, such as foodstuff etc. In WO 2005/078402 the colour is provided by a pH-dye indicator, changing colour in respect of a change in pH as a result of the activation of for example acid producing microorganisms. Thus, the cover according to WO 2005/078402 is in need of a pH-dye indicator.

WO 98/56221 discloses a colour changing casing, comprising a compound which changes colour under the effect of ultraviolet light. Thus, the colour changing casing according to WO 98/56221 may only be influenced by one environmental influence and may only visualize two different states, i.e. a coloured state and a non-coloured state, in respect of said colour.

GB 2,402,750 discloses a casing wherein an image is produced on the casing by applying an electrical control signal to an electrochromic material in the casing. Thus, the device according to GB 2,402,750 is in need of an electronic circuit for producing the image.

Hence, there may be a need for a more advantageous cover.

### Summary

Hereinafter, aspects of the invention are described.

According to a first aspect, a cover may comprise at least one microorganism. The at least one microorganism may be configured to provide an appearance to said cover.

The at least one microorganism may be contained in at least one containment.

The at least one containment may be a hollow space, located between an inner wall and an outer wall of said cover.

At least two containments may be connected.

The cover may be a cover of an electronic equipment.

The electronic equipment may be a mobile phone.

The cover may be provided with a connection, suitable to connect said cover to a second cover.

According to a second aspect, an ampoule may be connectable to the connection according to above.

The ampoule may comprise at least one microorganism.

According to a third aspect, a surface may have an appearance provided by at least one microorganism. The at least one microorganism may be configured for providing said appearance to said surface.

The at least one microorganism may be contained in at least one containment under said surface.

Further embodiments of the invention are defined in the dependent claims.

It should be emphasized that the term "comprises/comprising" when used in this specification is taken to specify the presence of stated features, integers, steps or components but does not preclude the presence or addition of one or more other features, integers, steps, components or groups thereof.

### Brief Description of the Drawings

These and other aspects, features and advantages of which the invention is capable of will be apparent and elucidated from the following description of embodiments of the present invention, reference being made to the accompanying drawings, in which:

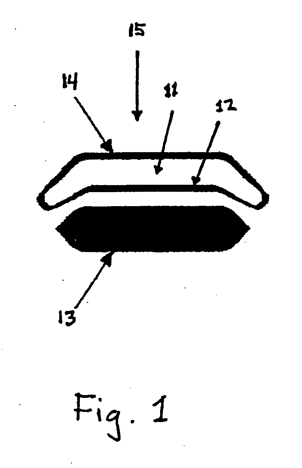

Fig. 1 is a cross section of a portion of a mobile phone with a cover according to some embodiments of the invention.

### Detailed Description

Specific exemplary embodiments of the invention now will be described with reference to the accompanying drawings. This invention may, however, be embodied in many different forms and should not be construed as limited to the embodiments set forth herein; rather, these embodiments are provided so that this disclosure will be thorough and complete, and will fully convey the scope of the invention to those skilled in the art. The terminology used in the detailed description of the particular exemplary embodiments illustrated in the accompanying drawings is not intended to be limiting of the invention, and is further described in detail below. In the drawings, like numbers refer to like elements.

The following description focuses on some embodiments of the present invention which may be applicable to a cover, such as a phone cover or a mobile phone cover. However, it will be appreciated that the invention is not limited to this application but may be applied to many other technical fields, including for example covers suitable for the enclosing of electronic equipment, such as a computer housing or a screen housing. Hence, some embodiments of the invention may allow for creating variable colours and decorations in respect of surfaces, such as a mobile phone cover, with the aid of microorganisms. Especially, an improved system for creating variable colours and decorations in respect of surfaces, such as a mobile phone cover, with the aid of microorganisms, are provided in some embodiments of the invention. Such a system may be cost effective, may not demand extra energy costs for the user, and may provide almost unlimited combinations of appearances of said surfaces.

In some embodiments of the present invention, microorganisms are integrated in a space of a cover, said space being visible from at least one direction, such as from the exterior side of said cover, where said microorganisms provide an appearance to said cover.

In some embodiments, a cover is provided with a thin hollow space. Thus, said cover, such as a cover for a mobile phone, has an inner wall, limiting said hollow space from the interior of the mobile phone, and an outer wall, limiting said hollow space from the exterior of the mobile phone. Thereby, a containment is created in the mobile phone cover by the inner and outer walls.

Fig. 1 illustrates an embodiment, wherein a cover is provided with a thin hollow space 11. Thus, said cover, such as a cover for a mobile phone, has an inner wall 12, limiting said hollow space from the interior 13 of the device on which the cover is located, and an outer wall 14, limiting said hollow space 11 from the exterior 15 of the device on which the cover is located. Thereby, a containment is created in the cover by the inner and outer walls 12, 14.

In the containment, microorganisms, such as bacteria, are introduced. These microorganisms may react and be influenced by different kinds of stimulus, such as temperature, light, oxygen, lack of oxygen, radiation, mechanic stress, moisture, and/or humidity, etc. The microorganisms start to propagate through at least one of the stimuli.

When a species of a suitable microorganism (such as bacteria) propagate, colonies of said microorganism are formed. These colonies may present numerous, if not infinite, colours, colour combinations, and/or appearances.

A microorganism may, for example, be chosen that is stimulated to propagation through temperature.

Thereby, if the containment of the mobile phone cover has a transparent outer wall, these colours, colour combinations, and/or appearances will be visible from the outside of said mobile phone.

Because the colonies may continue to evolve, the colour and/or appearance may continue to vary as a result of various stimuli.

In another embodiment the containment may be prepared with more than one species of microorganism, to thereby obtain more than one visual effect through more than one stimuli.

It may, for example, be possible to prepare said containment with microorganisms that propagate by stimulation of UV-light and/or temperature. Thereby, it may be possible to obtain colour variations from sun light and warm weather, i.e. the cover would obtain an artificial tan etc. It may also be possible to see if the device, such as a mobile phone, on which the cover is located, has been on "vacation", i.e. if the device has not been used for a while, which may result in a colour change in response to decreased average temperature during a certain time period.

In other embodiments, the containment is provided with sub-containments. The sub-containments may be connected to each other with channels. These embodiments may provide the possibility to have a certain area, or certain areas, of the mobile phone cover affected by the change of appearance. Different microorganisms may be placed in different sub-containments. Hereby, it may be possible to obtain different variations regarding appearance in the different sub-containments of the containment. One microorganism may in this embodiment dominate the other(s) present in the various sub-containments, e.g. if these sub-containments are connected to each other with channels. The propagation of microorganisms may also be directed to certain spots and areas in the cover, such as a cover of a mobile phone.

In some embodiments, the mobile phone cover is provided with at least one piece. This at least one piece is interacting with a containment or sub-containment of the cover. The piece may be broken off. When such a piece is broken off, a propagation of a microorganism is initiated. The initiation of the propagation may, for example, be initiated by releasing said microorganism from an inclusion. Said microorganism may then propagate when subjected to stimulus, such as oxygen, light, temperature etc., and may spread in the containments of said cover. This embodiment provides the possibility to regulate and/or control the appearance of said cover, by initiating propagation of microorganisms, which microorganisms not yet have been able to propagate in said cover.

The regulation and/or control of the appearance of the mobile phone cover may be obtained by choosing different amounts of the microorganisms initially present in the mobile phone cover.

The releasing of different microorganisms may, in some embodiments, be initiated by interaction with the mobile phone, such as generated heat or radiation during phone calls or different pressings of buttons on the mobile phone.

In still other embodiments, the cover is provided with a connector, said connector being connectable to another cover. In this way two covers may interchange microorganisms. This results in the possibility to "mate" two covers, in respect of interchanging evolved microorganisms. This connector may also be used to insert new and/or more microorganisms into the cover.

In this context, an ampoule or capsule is provided, which ampoule or capsule comprises microorganism(s). The ampoule or capsule comprises a connector. The ampoule or capsule is connectable to the connector of the cover.

The above embodiments have been described with reference to a mobile telephone. However, embodiments of the present invention may provide any type of cover, such as a cover for a device or apparatus, such as an electronic apparatus or device. An electronic apparatus or device may, for example, be a portable or handheld mobile radio communication equipment, a mobile radio terminal, a mobile telephone, a pager, a communicator, an electronic organizer, a smartphone and/or a computer.

The elements and components of embodiments of the invention may be physically, functionally and logically implemented in any suitable way. Indeed, the functionality may be implemented in a single unit, in a plurality of units or as part of other functional units. As such, the invention may be implemented in a single unit, or may be physically and functionally distributed between different units.

Although the present invention has been described above with reference to specific embodiments, it is not intended to be limited to the specific form set forth herein. Rather, the invention is limited only by the accompanying claims and, other embodiments than the specific above are equally possible within the scope of these appended claims.

In the claims, the term "comprises/comprising" does not exclude the presence of other elements or steps. Furthermore, although individually listed, a plurality of means, elements or method steps may be implemented by e.g. a single unit or processor. Additionally, although individual features may be included in different claims, these may possibly advantageously be combined, and the inclusion in different claims does not imply that a combination of features is not feasible and/or advantageous. In addition, singular references do not exclude a plurality. The terms "a", "an", "first", "second" etc do not preclude a plurality.

## Claims

1. A cover for an electronic equipment, comprising at least one containment (11) with a transparent wall (14) and at least one microorganism comprised in said at least one containment (11), wherein said at least one microorganism being of a species which forms colonies upon stimuli of propagation, said colonies having a colour for providing an appearance to said cover through said transparent wall (14).

2. A cover according to claim 1, wherein said at least one containment is a hollow space (11), located between an inner wall (12) and an outer wall (14) of said cover.

3. A cover according to claim 1, wherein at least two containments are connected.

4. A cover according to claim 1, wherein said electronic equipment is a mobile phone.

5. A cover according to any of the preceding claims, wherein said cover is provided with a connector suitable to connect said cover to a second cover.

6. An ampoule, wherein said ampoule is connectable to the connector according to claim 5.

7. An ampoule according to claim 6, said ampoule comprising at least one microorganism.

## Patentansprüche

1. Abdeckung für ein elektronisches Gerät, welche mindestens ein Behältnis (11) mit einer durchsichtigen Wandung (14) und mindestens einen in diesem einen Behältnis (11) enthaltenen Mikroorganismus aufweist, wobei der mindestens eine Mikroorganismus von einer Art ist, die aufgrund von Stimuli zur Vermehrung Kolonien mit einer Farbe bildet, welche durch die durchsichtige Wandung (14) hindurch der Abdeckung ein Aussehen gibt.

2. Abdeckung nach Anspruch 1, wobei dieses mindestens eine Behältnis ein Hohlraum (11) ist, der zwischen einer inneren Wandung (12) und einer äußeren Wandung (14) der Abdeckung angeordnet ist.

3. Abdeckung nach Anspruch 1, wobei mindestens zwei Behältnisse miteinander verbunden sind.

4. Abdeckung nach Anspruch 1, wobei das elektronische Gerät ein Mobiltelefon ist.

5. Abdeckung nach einem der vorstehenden Ansprüche, wobei die Abdeckung eine Steckvorrichtung aufweist, mittels der die Abdeckung mit einer zweiten Abdeckung verbunden werden kann.

6. Ampulle, welche mit der Steckvorrichtung aus Anspruch 5 verbunden werden kann.

7. Ampulle nach Anspruch 6, welche mindestens einen Mikroorganismus enthält.

## Revendications

1. Couvercle pour équipement électronique, comprenant au moins un espace de confinement (11) pourvu d'une paroi transparente (14) et au moins un micro-organisme contenu dans ledit au moins un espace de confinement (11), dans lequel ledit au moins un micro-organisme appartient à une espèce qui forme des colonies lors de stimuli de propagation, lesdites colonies ayant une couleur permettant de conférer un certain aspect audit couvercle à travers ladite paroi transparente (14).

2. Couvercle selon la revendication 1, dans lequel ledit au moins un espace de confinement est un espace creux (11), situé entre une paroi intérieure (12) et une paroi extérieure (14) dudit couvercle.

3. Couvercle selon la revendication 1, dans lequel au moins deux espaces de confinement sont reliés.

4. Couvercle selon la revendication 1, dans lequel ledit équipement électronique est un téléphone mobile.

5. Couvercle selon l'une quelconque des revendications précédentes, dans lequel ledit couvercle est muni d'un connecteur permettant de connecter ledit couvercle à un deuxième couvercle.

6. Ampoule, ladite ampoule pouvant être connectée au connecteur selon la revendication 5.

7. Ampoule selon la revendication 6, ladite ampoule comprenant au moins un micro-organisme.
